# EUROPÄISCHE PATENTSCHRIFT

(11) **EP 0 328 736 B1**
(45) Veröffentlichungstag und Bekanntmachung des Hinweises auf die Patenterteilung: **30.11.1994**
(21) Anmeldenummer: 88116081.6
(22) Anmeldetag: 29.09.1988
(51) Int. Cl.: H04B 14/02

(54) **Verfahren und Anordnung zum Regenerieren eines PPM-Signals**
Method and device for regenerating a PPM signal
Procédé et dispositif pour la régénération d'un signal PPM

(30) Priorität: 15.02.1988 DE 3804681
(43) Veröffentlichungstag der Anmeldung: 23.08.1989
(73) Patentinhaber: ANT Nachrichtentechnik GmbH, D-71522 Backnang (DE)
(72) Erfinder: Heichler, Johannes, Dipl.-Ing., D-7157 Murrhardt 3 (DE)

(56) Entgegenhaltungen:
- IBM TECHNICAL DISCLOSURE BULLETIN. vol. 30, no. 5, Oktober 1987, NEW YORK US Seiten 62 - 65; "Integrate and Dump Infarared Receiver for Four-Slot Pulse Position Modulation Decoding"
- OPTICAL TECHNOLOGIES FOR SPACE COMMUNICATION SYSTEMS, Proceedings of SPIE-The International Society for Optical Engineering, 15-16 January 1987, Bellingham US, Seiten 50-53; X. Sun et al. " Performance Measurements of a Diode Laser Optical Communications Link with Q=4 PPM Signaling"

## Beschreibung

Die Erfindung betrifft ein Verfahren und eine Anordnung zum Regenerieren eines PPM-(Pulse-Position-Modulation)-Signals.

Technical Disclosure Bulletin Vol. 30, No. 5, Oktober 1987, New York, USA, Seiten 62 - 65, offenbart ein Verfahren zum Regenerieren eines PPM-Signals mit vier Zeitschlitzen. Gemäß diesem Verfahren wird für jeden Zeitschlitz eine Integration des Signals durchgeführt und der Wert des Integrals, der der Amplitude des Signals im betreffenden zeitschlitz proportional ist, analog gespeichert. Danach wird der gespeicherte Wert für jeden Zeitschlitz mit einem Wert, der der maximalen Amplitude entspricht, mittels analoger Komparatoren verglichen. Bei Übereinstimmung des maximalen Wertes mit dem Wert des gerade verglichenen Zeitschlitzes wird ein Signal abgegeben, welches angibt, daß ein Impuls im betreffenden Zeitschlitz gesendet worden ist. Zur Ermittlung des maximalen Wertes dient ein Generator, der eine fallende Rampenfunktion erzeugt. Ausgegangen wird vom größtmöglichen Wert und anschließend wird dieser Wert vermindert bis eine Übereinstimmung mit einem gespeicherten Wert gefunden wird.

Aus Optical Technologies for Space Communication Systems, Proceedings of the SPIE (The International Society for Optical Engineering), 15 - 16 January, 1987, Bellingham, USA, Seiten 50 - 53, ist ein Verfahren zur Detektion eines PPM-Signals bekannt. Dort wird ein Empfangssignal über jedem Zeitschlitz integriert und festgestellt in welchem Zeitschlitz der größte Wert auftritt. Zum Vergleich werden analog arbeitende Komparatoren eingesetzt. Deren Ausgangswerte werden durch logische Glieder miteinander verknüpft und anschließend zur Weiterverarbeitung digitalisiert.

Die Aufgabe der Erfindung besteht darin, ein eingangs genanntes Verfahren und die zur Durchführung geeignete Anordnung anzugeben, das weitgehend unabhängig von der Übertragungsgeschwindigkeit einsetzbar ist.

Die Lösung dieser Aufgabe wird durch die Patentansprüche beschrieben.

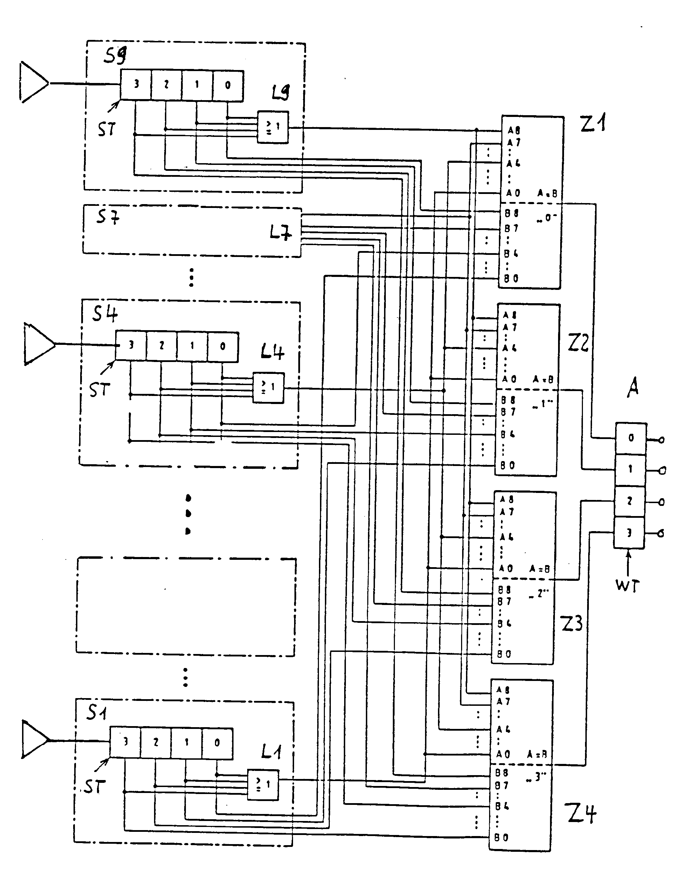

Anhand der Figur soll jetzt diese erfindungsgemäße Lösung näher dargestellt werden.

In der Figur ist ein Analog-Digital-Wandler mit neun Amplitudenstufen AD1- AD9 dargestellt.

Auf die den Amplitudenstufen zugeordneten Schwellwertschalter folgen je ein Schieberegister S1 - S9 mit soviel Speicherplätzen, wie ein PPM-Wort Zeitschlitze enthält, in diesem Beispiel vier. Die vier Ausgänge eines jeden Schieberegisters S1 - S9 sind zum einen über logische Oder-Schaltungen L1 - L9 miteinander verknüpft, zum anderen getrennt herausgeführt. Jedem Zeitschlitz des PPM-Signals ist ein Komparator Z1 - Z4 zugeordnet. Diese Komparatoren weisen je soviel A- bzw. B--Eingänge auf, wie Amplitudenstufen vorgesehen sind, in diesem Beispiel also neun. Die neun A-Eingänge der Komparatoren sind jeweils den neun Amplitudenstufen zugeordnet, d.h. jeder Ausgang einer logischen Oder-Schaltung ist auf jeweils einen A-Eingang eines jeden der vier Komparatoren gelegt. Die getrennten neun Speicherplatzausgänge der Schieberegister, die jeweils ein- und demselben Zeitschlitz zugeordnet sind, sind verbunden mit den neun B-Eingängen des demselben Zeitschlitz zugeordneten Komparators.

An den Ausgängen der vier Komparatoren Z1 - Z4 liegt das regenerierte PPM-Wort in paralleler Form vor und wird in einem Speicher A zwischengespeichert.
Durch Pfeile ST und WT ist die jeweilige Synchronisierung durch den Zeitschlitztakt ST oder den PPM-Wort-Takt WT angedeutet.

## Patentansprüche

1. Verfahren zum Regenerieren eines PPM-Signals mit n Zeitschlitzen, wobei für jeden Zeitschlitz eine AnalogDigital-Wandlung durchgeführt und der sich ergebende digitale, der Amplitude entsprechende Wert für jeden Zeitschlitz gesondert gespeichert wird, wobei die Werte jeder Amplitudenstufe der n gespeicherten Werte parallel verarbeitend logisch miteinander verknüpft und der so ermittelte digitale Wert für die maximale Amplitude als Bitposition n Zahlenkomparatoren zugeführt wird, wobei der so erhaltene Bitpositionswert für die maximale Amplitude mit den Bitpositionswerten für jeden der n Zeitschlitze verglichen und bei Übereinstimmung des Wertes für die maximale Amplitude mit dem Wert der Amplitude für den gerade verglichenen Zeitschlitz ein Signal abgegeben wird.

2. Anordnung zum Regenerieren eines PPM-Signals mit n Zeitschlitzen, wobei am Eingang ein AD-Wandler mit p Amplitudenstufen vorgesehen ist, deren p Digitalausgänge auf p n-stufige Schieberegister (S1 - S9) mit den Ausgängen S₁₁ - Sₚₙ gelegt sind, deren je n Ausgänge Sₚ₁ - Sₚₙ wiederum mit den je n Eingängen von p logischen Oder-Schaltungen (L1 - L9) verbunden sind, deren p Ausgänge parallel mit den p A-Eingängen von n Zahlenkomparatoren (Z1 - Z4) verbunden sind, wobei weiter die n Ausgänge der p Schieberegister auf die p B-Eingänge der n Zahlenkomparatoren gelegt sind, so daß jeweils die gleichrangigen Stellen der Schieberegister (S₁₁ - Sₚ₁ bzw. S₁₂ - Sₚ₂ usw.) ein p-bit-breites Eingangswort für den dem jeweiligen Rang der Schieberegisterstellen zugeordneten Zahlenkomparatoren bilden, wobei die Zahlenkomparatoren (Z1 - Z4) nur dann ein Ausgangssignal erzeugen, wenn die Signale am A-Eingang mit den Signalen am B-Eingang übereinstimmen, und wobei das regenerierte PPM-Signal durch die Signale an den n Ausgängen der Zahlenkomparatoren (Z1 - Z4) gebildet wird.

## Claims

1. Method of regenerating a pulse-position-modulation signal with n time slots, wherein an analog-to-digital conversion is carried out for each time slot and the resulting digital value, which corresponds to the amplitude, for each time slot is stored separately, wherein the values of each amplitude step of the n stored values are logically interlinked by processing in parallel and the thus ascertained digital value for the maximum amplitude is fed as bit position to n numerical comparators, wherein the thus obtained bit position value for the maximum amplitude is compared with the bit position values for each of the n time slots and a signal is issued on agreement of the value for the maximum amplitude with the value of the amplitude for the just compared time slot.

2. Arrangement for regenerating a pulse-position-modulation signal with n time slots, wherein provided at the input is an analog-to-digital converter with p amplitude steps, the p digital outputs of which are applied to p n-stepped shift registers (S1 to S9) with the outputs S₁₁ to Sₚₙ, the n outputs Sₚ₁ to Sₚₙ of each of which are in turn connected with the n inputs of a respective one of p logic OR switches (L1 to L9), the p outputs of which are connected in parallel with the p A-inputs of n numerical comparators (Z1 to Z4), wherein moreover the n outputs of the p shift registers are applied to the p B-inputs of the n numerical comparators, so that the identically ranked positions of the shift registers (S₁₁to Sₚ₁ or Sₚ₂ to Sₚ₂, etc) each time form an input word of p bit width for the numerical comparator associated with the respective rank of the shift register positions, wherein the numerical comparators (Z1 to Z4) generate an output signal only when the signals at the A-input agree with the signals at the B-input and wherein the regenerated pulse-position-modulation signal is formed by the signals at the n outputs of the numerical comparators (Z1 to Z4).

## Revendications

1. Procédé pour la régénération d'un signal PPM ayant n coupures de temps, une conversion analogique-numérique étant exécutée pour chaque coupure de temps et la valeur numérique résultant, correspondant à l'amplitude, pour chaque coupure de temps, étant emmagasinée séparément, les valeurs de chaque étage d'amplitude des n valeurs emmagasinées étant enchaînées logiquement les unes avec les autres, traitées logiquement en parallèle, et, la valeur numérique pour l'amplitude maximale ainsi détectée étant amenée comme position de bit de n comparateur de nombre, la valeur de position de bit pour l'amplitude maximale ainsi obtenue étant comparée avec les valeurs de position de bit pour chacune des n coupures de temps, et, lors de coïncidence de la valeur pour l'amplitude maximale avec la valeur de l'amplitude pour la coupure de temps justement comparée, un signal étant émis.

2. Agencement pour la régénération d'un signal PPM ayant n coupures de temps, un convertisseur AD avec p étages d'amplitude étant prévu à l'entrée, dont les p sorties numériques sont appliqués sur des registres à décalage à pn étages (S1 à S9) avec les sorties S₁₁ à Sₚₙ, dont, chaque fois, les n sorties Sₚ₁ à Sₚₙ, à leur tour, sont reliées avec, chaque fois, les n entrées de p circuit OU logique (L1 à L9), dont les p sorties sont reliées en parallèle avec les p entrées A de n comparateur de nombre (Z1 à Z4), les n sorties des p registres à décalage étant de plus appliquées sur les p entrées B des n comparateurs de nombre, de sorte que, chaque fois, les emplacements de même rang des registres de décalage (S₁₁ à Sₚ₁ ou bien S₁₂ à Sₚ₂ etc.) forment un mot d'entrée de largeur de p bits pour le comparateur de nombre associé, chaque fois, au rang des emplacements de registre à décalage, les comparateurs de nombre (Z1 à Z4) engendrant seulement alors un signal de sortie, lorsque les signaux à l'entrée A coïncident avec les signaux à l'entrée B, et le signal PPM régénéré étant formé par les signaux aux n sorties des comparateurs de nombre (Z1 à Z4).
